**Europäisches Patentamt**

**European Patent Office**

**Office européen des brevets**

(19)

(11) Veröffentlichungsnummer: **0 125 620**
**A1**

(12) # EUROPÄISCHE PATENTANMELDUNG

(21) Anmeldenummer: **84105231.9**

(22) Anmeldetag: **09.05.84**

(51) Int. Cl.³: **B 60 H 3/06**
**B 01 D 45/08**

(30) Priorität: **16.05.83 US 495319**

(43) Veröffentlichungstag der Anmeldung:
**21.11.84 Patentblatt 84/47**

(84) Benannte Vertragsstaaten:
**AT BE CH DE FR GB IT LI NL SE**

(71) Anmelder: **DEERE & COMPANY**
**1 John Deere Road**
**Moline Illinois 61265(US)**

(72) Erfinder: **Hosford, Gregory Sander**
**313 Drynan Dr.**
**Waterloo Iowa 50701(US)**

(72) Erfinder: **Shirk, Thomas Michael**
**4524 Hoff Road**
**Waterloo Iowa 50701(US)**

(72) Erfinder: **Delaney, William Robert**
**2818 Garden Ave.**
**Cedar Falls Iowa 50613(US)**

(74) Vertreter: **Feldmann, Bernhard et al,**
**DEERE & COMPANY European Office, Patent**
**Department Steubenstrasse 36-42 Postfach 503**
**D-6800 Mannheim 1(DE)**

(54) Luftfiltersystem.

(57) Luftfiltersystem mit einem Außenluft über einen Einzugsschacht (24) in einen geschlossenen Raum (14, 16) saugenden Gebläse (26) und einem Vorreiniger (28, 29), der einen Auslaß (38) aufweist, über den vorgereinigte Luft in den Raum geleitet wird. Das Gebläse (26) erhöht dabei den Druck über den der Außenluft und ist mit Bezug auf die Luftströmungsrichtung dem Vorreiniger (28, 29) vorgeschaltet, der einen weiteren Auslaß (36) aufweist, der zu der Atmosphäre außerhalb des geschlossenen Raums (14, 16) offen ist.

FIG. 2

EP 0 125 620 A1

Croydon Printing Company Ltd

Luftfiltersystem

Die Erfindung bezieht sich auf ein Luftfiltersystem mit einem Außenluft über einen Einzugsschacht in einen geschlossenen Raum saugenden Gebläse und einem Vorreiniger, der einen Auslaß aufweist, über den vorgereinigte Luft in den Raum geleitet wird.

Bei einem derartigen Luftfiltersystem (US-A-4 344 356) ist der Vorreiniger vor dem Gebläse angeordnet, wodurch im Vorreiniger ein negativer Druck erzeugt wird. Die Luft tritt dabei mit atmosphärischem Druck in den Vorreiniger ein und während des Ausscheidens der Schmutzpartikel fällt der Druck ab. Die Schmutzpartikel werden gesammelt und müssen von Hand oder durch andere Hilfsmittel entfernt werden.

Die mit der Erfindung zu lösende Aufgabe wird darin gesehen, den Vorreiniger vorteilhafter anzuordnen und auszubilden.

Diese Aufgabe ist gemäß der Erfindung dadurch gelöst worden, daß das Gebläse den Druck über den der Außenluft erhöht und mit Bezug auf die Luftströmungsrichtung dem Vorreiniger vorgeschaltet ist, der einen weiteren Auslaß aufweist, der zu der Atmosphäre außerhalb des geschlossenen Raums offen ist. Auf diese Weise findet in dem Vorreiniger kein Druckabfall statt und ein Gebläse reicht grundsätzlich aus, um das Luftfiltersystem wirkungsvoll in Betrieb zu halten.

Damit der Vorreiniger selbstreinigend ausgebildet ist, wird nach der Erfindung vorgeschlagen, daß er den Luftstrom in einen vorgereinigten und in einen mit Schmutzpartikeln aufteilt, wobei der Luftstrom mit den Schmutzpartikeln durch den weiteren Auslaß geführt ist. Somit
können sich die Schmutzpartikel nicht mehr in dem Vorreiniger ansammeln und werden unmittelbar in die Atmosphäre abgeführt.

Bei einem Luftfiltersystem mit einem volumenkonstanten
einstufigen Gebläse ist erfindungsgemäß das Gebläse am
Einlaß des Vorreinigers vorgesehen, der derart ausgebildet ist, daß der Druck am Einlaß höher ist, als an den
beiden Auslässen.

Hierbei kann der Druck am Einlaß des Vorreinigers mindestens 0,002488 bar, vorzugsweise mindestens 0,003732
bar betragen.

Nach der Erfindung kann der Vorreiniger aber auch als
Trennzentrifuge ausgebildet sein.

Ist der Vorreiniger nicht als Trennzentrifuge gestaltet,
so kann er erfindungsgemäß trichterförmig ausgebildet
sein, und der Auslaß für die vorgereinigte Luft befindet
sich zwischen seinem Einlaß und dem weiteren Auslaß
und weist eine Vielzahl von Rippen auf.

Vorteilhaft weist hierbei der Einlaß einen größeren Einlaßquerschnitt auf als der weitere Auslaß, wobei der Einlaß, beide Auslässe und die schrägverlaufende Oberfläche
des Vorreinigers derart angeordnet sind, daß der Luftstrom mit den Schmutzpartikeln im Vorreiniger eine konstante Geschwindigkeit aufweist, wobei die schrägverlaufende Oberfläche des Vorreinigers mit einer Senkrechten
einen Winkel zwischen 5 bis 10° bildet.

Dadurch, daß die Rippen mit Bezug auf die Strömungsrichtung nach unten abgewinkelt sind, wird nach der Erfindung ein Luftstrom so abgelenkt, daß die Schmutzpartikel nicht mehr mitgenommen werden können. Zweckmäßig bilden die Rippen mit der schrägverlaufenden Oberfläche des Vorreinigers einen Winkel zwischen 10 und 45°, vorzugsweise zwischen 20 bis 25°.

Von Vorteil ist, wenn die Rippen flach ausgebildet und derart angeordnet sind, daß die Strömungsrichtung des vorgereinigten Luftstroms gegenüber dem Luftstrom mit den Schmutzpartikeln in einem Winkel von größer als 90° und kleiner als 180° abgelenkt wird.

Dabei sind die Rippen zueinander parallel ausgebildet und der Auslaß für die vorgereinigte Luft weist einen größeren Einlaßquerschnitt als der Einlaß auf.

In der Zeichnung sind zwei nachfolgend näher erläuterte Ausführungsbeispiele der Erfindung dargestellt. Es zeigt:

Fig. 1 einen Ackerschlepper in Seitenansicht, dessen Kabine mit einem Luftfiltersystem ausgerüstet ist;

Fig. 2 die Kabine mit dem Luftfiltersystem in größerem Maßstab;

Fig. 3 ein Gebläse mit Vorreiniger in schematischer Darstellung;

Fig. 4 einen Ausschnitt aus Fig. 3;

Fig. 5 ein weiteres Ausführungsbeispiel für einen Vorreiniger mit vorgeschaltetem Gebläse.

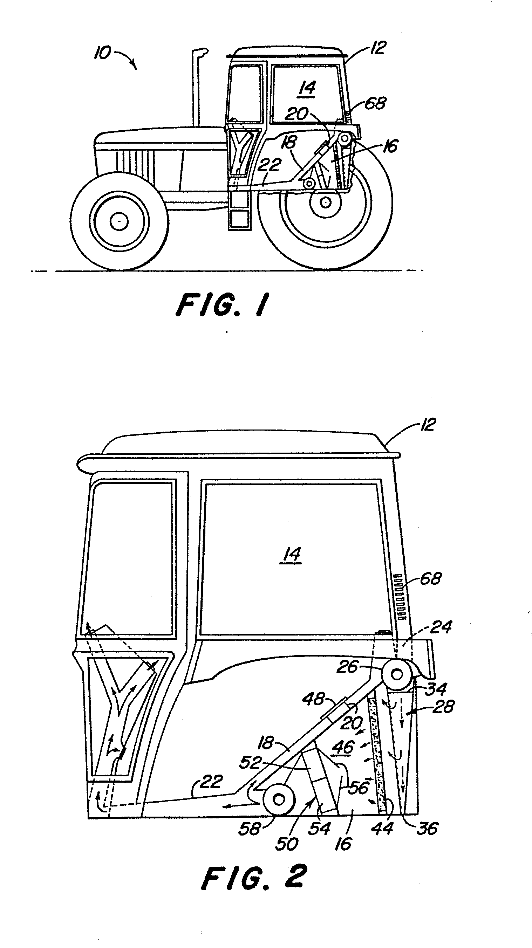

In Fig. 1 der Zeichnung ist ein Ackerschlepper 10 mit einer allseits geschlossenen Kabine 12 dargestellt. Diese weist einen ersten abgeteilten Raum 14 für die Bedienungsperson und einen zweiten abgeteilten Raum 16 für ein Luftfiltersystem auf. Beide Räume 14 und 16 sind durch eine Trennwand 18, die mit einer Öffnung 20 versehen ist, abgeteilt. Mit Abstand zu der Öffnung 20 sind Kanalschächte 22 vorgesehen, von denen Luft aus dem Raum 16 den verschiedensten Düsen im Raum 14 zugeführt werden kann. Derartige Kanalschächte sind in der US-A-4 344 356 offenbart, auf die sich dieserhalb bezogen wird.

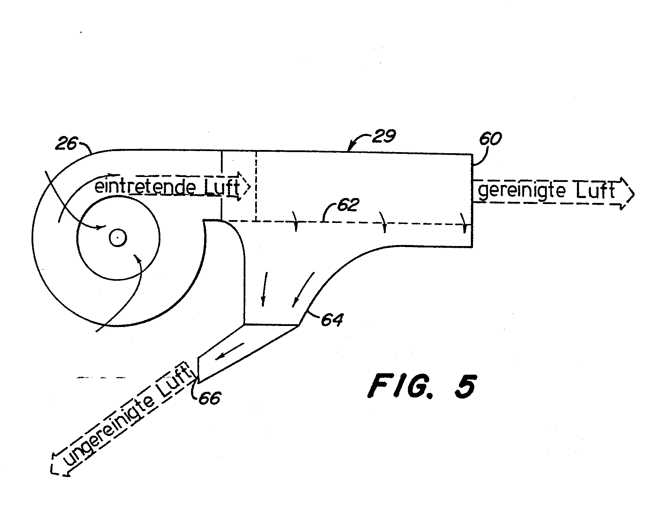

In Fig. 2 ist ein Einzugsschacht mit 24 bezeichnet, über den die Luft außerhalb der Kabine, die atmosphärischen Druck und Verunreinigungen, wie Staub, Pollen etc, aufweist, in die Kabine gesaugt werden kann. Der Einzugsschacht ist an einer Seite der Kabine 12, vorzugsweise in deren rückwärtigem Bereich angeordnet. Das Ansaugen der Luft erfolgt über ein mit dem Einzugsschacht 24 in der Kabine verbundenes Gebläse 26, über das der Luftdruck über den der Atmosphäre außerhalb der Kabine erhöht wird. Das Gebläse kann dabei einstufig mit konstantem Saugvolumen ausgebildet werden und den Druck auf 0,002488 bar (1 zoll Wasserdruck) oder vorzugsweise auf 0,003732 bar (1,5 zoll Wasserdruck) erhöhen. Unterhalb des Gebläses ist ein Vorreiniger vorgesehen, der in Form eines konisch ausgebildeten umschlossenen Raums 28, wie aus den Fig. 2 bis 4 hervorgeht, oder der in Form einer Trennzentrifuge 29 nach Fig. 5 ausgebildet sein kann.

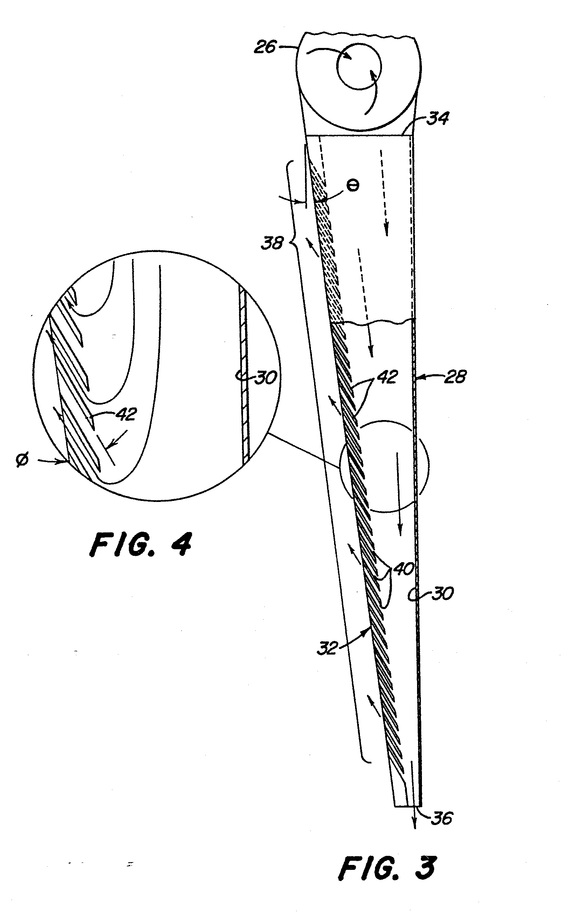

Der Vorreiniger in der Form des umschlossenen Raums 28 besteht aus einem langgestreckten Hohlteil 30 mit einer halbseitigen konisch verlaufenden Oberfläche 32. Deren Winkel mit einer Senkrechten kann zwischen 5 bis 10° betragen und ist in Fig. 3 mit $\Theta$ bezeichnet. Je nach Länge des Hohlteils 30 können auch andere Winkel Verwendung finden. Länge und Winkel stehen in Abhängigkeit von dem zur Verfügung stehenden Raum. Die konisch verlaufende Oberfläche 32 erstreckt sich im gezeigten Ausführungsbeispiel über die gesamte Länge des Hohlteils von einer Einlaßöffnung 34 am oberen Ende bis zu einem ersten Auslaß 36 am unteren Ende. Letzterer ist so ausgebildet, daß seine Querschnittsfläche kleiner ist als die der Einlaßöffnung 34. Auslaß und Einlaßöffnung sind aber zueinander ausgerichtet. Eine gekrümmte Form des Hohlteils 30 ist aber ebenfalls denkbar, wenn dabei der Druckabfall das System nicht unwirksam macht. Auch kann das ganze Hohlteil 30, wie es in Fig. 2 gezeigt ist, als Kegelstumpf ausgebildet sein. Jedenfalls soll die Querschnittsfläche des Hohlteils von der Einlaßöffnung 34 bis zum Auslaß 36 abnehmen, damit die Luftgeschwindigkeit in Längsrichtung konstant oder etwa konstant bleibt.

Der Hohlteil 30 ist im Bereich seiner konisch verlaufenden Oberfläche mit einem zweiten Auslaß 38 ausgerüstet, der aus einer Vielzahl von durch Rippen 42 getrennten Öffnungen 40 besteht. Damit weisen die Öffnungen 40 zueinander Abstand auf und die Rippen können mit dem Hohlteil 30 zweckmäßig verbunden sein. Die Öffnungen sind über die gesamte Länge des Hohlteils gleichmäßig verteilt, und die Rippen sind im Hohlteil nach unten gerichtet in einem Winkel $\emptyset$ (Fig. 4) von 10 bis 45° oder vorzugsweise von 20 bis 25°. Dadurch weisen die innenliegenden Enden der Rippen zu der Einlaßöffnung einen größeren Abstand auf als deren außenliegende Enden. Obwohl die Durchmesser der Öffnungen variieren können, sollten sie aus praktischen Erwägungen etwa gleich groß sein, und jeder sollte in etwa dem Querschnitt des ersten Auslasses 36 entsprechen. Alle Öffnungen zusammen sollten einen größeren Durchmesser ergeben als die Querschnittsfläche der Einlaßöffnung 34, da dadurch der Druckabfall der durch den Hohlteil 30 strömenden Luft verringert wird.

Durch die - wie vorstehend beschrieben - angeordneten Rippen 42 wird ein Teil der durch den Hohlteil strömenden Luft gezwungen, einen Richtungswechsel vorzunehmen, und zwar in einem Winkel größer als 90° und kleiner als 180°. Die Rippen 42 sind flach ausgebildet und ihre gegenüberliegenden Oberflächen bewirken die Richtungsänderung der Luft in nur eine Richtung, so daß der Druckabfall in dem Hohlteil 30 auf ein Minimum reduziert werden kann. Da die von dem Gebläse 26 angesaugte und in den Hohlteil 30 einströmende Luft einen über dem außerhalb der Kabine herrschenden Atmosphärendruck liegenden Druck aufweist, werden etwa 85 bis 90 % der Luft über die Rippen 42 durch die Öffnungen 40 abgeleitet. Durch den plötzlichen Richtungswechsel wird der umgeleitete Teil der Luft von seinen Schmutzpartikeln etc. befreit, da das diesen innewohnende Moment bewirkt, daß die Schmutzpartikel etwa in gerader, d.h. nicht abgeleiteter Richtung weiterfliegen oder fallen. Diese werden von den etwa 10 bis 15 % der nicht umgeleiteten Luft mitgenommen und gelangen mit diesem kleineren Teil der Luft durch den ersten Auslaß 36, der wiederum, wie aus Fig. 2 zu erkennen ist, zur Atmosphäre offen ist. Damit gelangen diese Partikel wieder in die Atmosphäre. Da der Druck in dem Hohlteil höher ist als der unmittelbar hinter dem ersten Auslaß herrschende, werden die Partikel allein schon durch die Druckdifferenz, die am ersten Auslaß herrscht, aus dem Hohlteil austreten.

Der gereinigte durch die Öffnungen 40 durchtretende Luftstrom trifft, wie aus Fig. 2 hervorgeht, auf einen Filter 44 aus Papier. Dieser liegt mit Bezug auf den Hohlteil 30 stromabwärts und filtert eventuell noch vorhandene (etwa 5 bis 10 %, wenn überhaupt) Schmutzpartikel etc. aus. Danach gelangt dieser Luftstrom in eine Mischzone 46, in der er sich mit Luft aus dem Raum 14 vermischt. Diese Luft gelangt in die Mischzone 46 durch einen zweiten Filter 48 an der Trennwand, der dazu dient, die verbrauchte Kabinenluft, in der Tabakqualm etc. enthalten sein kann, entsprechend zu reinigen. Die Luft aus der Mischzone 46 wird weiter über einen Aufbereitungsmechanismus 50 mit einer Heizung 52 und einer Kühleinheit 54 geführt. Welcher Anteil der Luft über die Heizung 52 oder die Kühleinheit 54 geführt wird, hängt von Reguliermitteln 56, beispielsweise schwenkbare Klappen oder Türen, ab, die von Hand oder mechanisch betätigbar sind.

Über ein zweites Gebläse 58 wird die Luft durch die Filter 44 und 48 und den Aufbereitungsmechanismus gesaugt. Das zweite Gebläse 58 kann mehrstufig ausgebildet sein und damit unterschiedliche Luftmengen ansaugen. Es ist zu dem ersten Gebläse 26 in Reihe geschaltet, unterstützt damit das erste Gebläse bei dem Luftdurchtritt durch den Filter 44 und fördert die Luft in den oder die Kanalschächte 22 zu den verschiedensten Luftdüsen im Raum 14 im Kabineninneren.

Auch bei der Trennzentrifuge nach Fig. 5 ist das erste Gebläse 26 stromaufwärts angeordnet. Derartige Trennzentrifugen können als zylindrische Hohlteile ausgebildet sein, wobei in der Regel zwei oder mehr Hohlteile parallel zueinander ausgerichtet sind und eine oder mehrere innere Spiralen aufweisen. Dadurch werden die schwereren Schmutzpartikel etc. nach außen gegen die äußere Peripherie der Trennzentrifuge 29 durch die Zentrifugalkraft gedrückt, wohingegen ein gereinigter Luftstrom in Längsrichtung bis durch einen endseitigen Auslaß 60 gefördert wird. Da die Trennzentrifuge 29 stromabwärts des ersten Gebläses 26 angeordnet ist, kann die durch den Auslaß 60 austretende und gereinigte Luft über den Filter 44 in die Mischzone 46 gelangen. Die Trennzentrifuge 29 ist des weiteren mit einem zweiten Auslaß 62 in Form von vielen in ihre Peripherie eingearbeiteten Öffnungen versehen, über die Schmutzpartikel und etwa 10 % des Luftstroms in einen Schmutzkasten 64 gelangen. Dieser ist konisch ausgebildet, verjüngt sich nach unten bis zu einer schmalen Öffnung 66, die wiederum zur Atmosphäre hin offen ist. Dieses Luftfiltersystem arbeitet ähnlich, wie das nach den Fig. 2 bis 4. Auch hier ist der Druck in der Trennzentrifuge und am Auslaß 62 höher als der atmosphärische Druck. Die Druckdifferenz am Auslaß 62 bewirkt, daß die Schmutzpartikel aus dem Schmutzkasten 64 leicht in die Atmosphäre austreten.

Beide Vorreiniger haben gemeinsam, daß der die Schmutzpartikel aufweisende Luftstrom ohne zusätzliche Hilfsmittel in die Atmosphäre austreten kann. Dies bewirkt das vor dem Vorreiniger angeordnete Gebläse 26, das darüber hinaus dazu beiträgt, daß der Druckabfall im Vorreiniger möglichst klein gehalten wird und daß die Vorreiniger zudem noch ständig gereinigt werden. Dadurch erhalten die im Luftfiltersystem vorgesehenen herkömmlichen Filter 44 und 48 eine längere Lebensdauer und die Wartungsintervalle können vergrößert werden.

Luftschlitze 68 oder ein Sieb können noch am Einlaß des Einzugsschachts 24 installiert werden, so daß größere Fremdkörper, wie Steine, Blätter, Gräser etc., die in den Gebieten, in denen Ackerschlepper oder ähnliche Arbeitsfahrzeuge arbeiten, immer aufgewirbelt werden, nicht in den
Einzugsschacht 24 eintreten können.

Selbstverständlich kann das vorstehend beschriebene Luftfiltersystem auch bei stationären Geräten oder Einrichtungen
gleich vorteilhaft eingesetzt werden.

Patentansprüche

1. Luftfiltersystem mit einem Außenluft über einen Einzugsschacht (24) in einen geschlossenen Raum (14, 16) saugenden Gebläse (26) und einem Vorreiniger (28, 29), der
   einen Auslaß (38) aufweist, über den vorgereinigte Luft
   in den Raum geleitet wird, dadurch gekennzeichnet, daß
   das Gebläse (26) den Druck über den der Außenluft erhöht und mit Bezug auf die Luftströmungsrichtung dem Vorreiniger (28, 29) vorgeschaltet ist, der einen weiteren
   Auslaß (36) aufweist, der zu der Atmosphäre außerhalb
   des geschlossenen Raums (14, 16) offen ist.

2. Luftfiltersystem nach Anspruch 1, dadurch gekennzeichnet,
   daß der Vorreiniger (28, 29) derart ausgebildet ist,
   daß er den Luftstrom in einen vorgereinigten und in
   einen mit Schmutzpartikeln aufteilt, wobei der Luftstrom mit den Schmutzpartikeln durch den weiteren Auslaß (36) geführt ist.

3. Luftfiltersystem nach Anspruch 1 oder 2, wobei das Gebläse (26) einstufig mit konstantem Volumen ausgebildet ist, dadurch gekennzeichnet, daß das Gebläse (26)
   am Einlaß (34) des Vorreinigers (28, 29) vorgesehen
   ist, der derart ausgebildet ist, daß der Druck am Einlaß (34) höher ist, als an den beiden Auslässen (36,
   38).

4. Luftfiltersystem nach einem oder mehreren der vorherigen Ansprüche, dadurch gekennzeichnet, daß der Druck
   am Einlaß (34) des Vorreinigers (28, 29) mindestens
   0,002488 bar, vorzugsweise mindestens 0,003732 bar beträgt.

5. Luftfiltersystem nach Anspruch 1, dadurch gekennzeichnet, daß der Vorreiniger als Trennzentrifuge (29) ausgebildet ist.

6. Luftfiltersystem nach Anspruch 1, dadurch gekennzeichnet, daß der Vorreiniger (28) trichterförmig ausgebildet ist und der Auslaß (38) für die vorgereinigte Luft sich zwischen seinem Einlaß (34) und dem weiteren Auslaß (36) befindet und eine Vielzahl von Rippen (42) aufweist.

7. Luftfilter nach Anspruch 6, dadurch gekennzeichnet, daß der Einlaß (34) einen größeren Einlaßquerschnitt aufweist als der weitere Auslaß (36), wobei der Einlaß (34), beide Auslässe (36 und 38) und die schrägverlaufende Oberfläche (32) des Vorreinigers (28) derart angeordnet sind, daß der Luftstrom mit den Schmutzpartikeln im Vorreiniger eine konstante Geschwindigkeit aufweist.

8. Luftfiltersystem nach Anspruch 6, dadurch gekennzeichnet, daß die schrägverlaufende Oberfläche (32) des Vorreinigers (28) mit einer Senkrechten einen Winkel zwischen 5 bis 10° bildet.

9. Luftfiltersystem nach Anspruch 6, dadurch gekennzeichnet, daß die Rippen (42) mit Bezug auf die Strömungsrichtung nach unten abgewinkelt sind.

10. Luftfiltersystem nach Anspruch 6, dadurch gekennzeichnet, daß die Rippen (42) mit der schrägverlaufenden Oberfläche (32) des Vorreinigers (28) einen Winkel zwischen 10 und 45°, vorzugsweise zwischen 20 bis 25° bilden.

11. Luftfiltersystem nach Anspruch 6, dadurch gekennzeichnet, daß die Rippen (42) flach ausgebildet und derart angeordnet sind, daß die Strömungsrichtung des vorgereinigten Luftstroms gegenüber dem Luftstrom mit den Schmutzpartikeln in einem Winkel von größer als 90° und kleiner als 180° abgelenkt wird.

12. Luftfiltersystem nach Anspruch 6, dadurch gekennzeichnet, daß die Rippen (42) zueinander parallel ausgebildet sind.

13. Luftfiltersystem nach Anspruch 6, dadurch gekennzeichnet, daß der Auslaß (38) für die vorgereinigte Luft einen größeren Einlaßquerschnitt als der Einlaß (34) aufweist.

0125620

**FIG. 1**

**FIG. 2**

0125620

FIG. 4

FIG. 3

0125620

3/3

eintretende Luft

gereinigte Luft

ungereinigte Luft

26  29  60  62  64  66

**FIG. 5**

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-1 289 861 (J. HOWDEN & CO.)  <br><br> * Insgesamt * <br><br> --- | 1,2,3, 6,9,11 ,12,13 | B 60 H 3/06 <br> B 01 D 45/08 |
| X | DE-B-1 135 868 (FA. H. PETERSEN) <br><br> * Spalten 3,4, Zeilen 35-52; Figur 4 * <br><br> --- | 1,2,4, 6,11, 12,13 | |
| X | US-A-2 787 334 (E.T. LINDEROTH) <br><br><br> * Insgesamt * <br><br> --- | 1,2,6, 7,8,9, 10,11, 12,13 | |
| A | US-A-2 076 815 (J.E. FULWEILER) <br><br> --- | | **RECHERCHIERTE SACHGEBIETE (Int. Cl. ³)** <br><br> B 60 H <br> B 01 D |
| A | US-A-2 182 862 (T.B. ALLARDICE) <br><br> --- | | |
| A | US-A-2 712 858 (H.A. WINTERMUTE) <br><br> --- | | |
| A | DE-A-1 407 952 (FARR CO.) <br><br> --- -/- | | |

Der vorliegende Recherchenbericht wurde für alle Patentansprüche erstellt.

| Recherchenort <br> DEN HAAG | Abschlußdatum der Recherche <br> 15-08-1984 | Prüfer <br> CINQUANTINI B. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 042 597 (DEERE & CO.) <br><br> & US - A - 4344356 (Cat. D) <br><br> ----- | | |

RECHERCHIERTE SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 15-08-1984 | Prüfer <br> CINQUANTINI B. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82